# EUROPEAN PATENT APPLICATION

(11) **EP 4 321 976 A1**
(43) Date of publication of application: **14.02.2024**
(21) Application number: 22189872.9
(22) Date of filing: 11.08.2022
(51) Int. Cl.: G06F 3/038, G06F 3/01

(54) **PROVIDING INPUT COMMANDS FROM INPUT DEVICE TO ELECTRONIC APPARATUS**

(71) Applicant: Koninklijke Philips N.V., 5656 AG Eindhoven (NL)
(72) Inventor: LAUTE, Niels, Eindhoven (NL); VERSCHOOR, Volker Barnhart, Eindhoven (NL); GEURTS, Lucas Jacobus Franciscus, 5656AG Eindhoven (NL)
(74) Representative: Philips Intellectual Property & Standards

(57) **Abstract**

A system and method are provided for providing input commands from an input device to an electronic apparatus. For that purpose, sensor data is obtained from a sensor, the sensor data is analysed to identify an electronic apparatus in a workspace which is the target of attention of a user, input commands are obtained from an input device operated by the user, and if the input device operated by the user is different from the target input device, the input device operated by the user is used as a source input device for the target electronic apparatus by the input commands from the source input device being provided to the target electronic apparatus. The latter comprises, if the target input device represents a different input modality than the source input device, converting the input commands to the different input modality. This way, the source input device may be used to emulate the target input device, despite both input devices representing different input modalities. Advantageously, more of the available input devices near the user may be used to operate the target electronic apparatus, reducing the need to switch input devices.

## Description

### FIELD OF THE INVENTION

The invention relates to a system and computer-implemented method for providing input commands from an input device to an electronic apparatus. The invention further relates to a computer-readable medium comprising instructions for causing a processor system to perform the computer-implemented method.

### BACKGROUND OF THE INVENTION

In recent years, consumers and professionals may interact with many different electronic apparatuses within a short timeframe. For example, medical professionals may interact with different medical apparatuses during their daily work and may frequently switch between using the medical apparatuses, for example by switching from using a computer to using a medical imaging apparatus. Each type of medical apparatus, or in general each type of electronic apparatus, may have a separate input means, i.e., a dedicated input device, which may be connected to or part of the electronic apparatus. For example, two computers may each have their own keyboard and mouse. Another example is that a workstation may be operable by keyboard and a mouse, while a medical imaging device may be operable by touch screen. When switching between the different electronic apparatuses, a user may thus have to switch between respective input devices. This may be disadvantageous, as it may require time to switch between input devices and may also require a user to physically reposition him/herself. This makes switching between electronic apparatuses cumbersome and time-consuming, in particularly when it is needed for a user to frequently switch between different electronic apparatuses.

It is known to use one input device to control different electronic apparatuses. For example, a Bluetooth keyboard may be connectable to different computers. However, such a Bluetooth keyboard may need to be (re)paired when switching between different computers. This may also be cumbersome and time-consuming. In addition, some types of electronic apparatuses may not support certain input devices. For example, a medical imaging apparatus may lack Bluetooth support, blocking the use of a Bluetooth keyboard.

US2021055789A1 describes a method which includes receiving information from an input device coupled to an information handling system. An eye-tracking device at the information handling system determines that a gaze point of a user has transitioned from a display device coupled to the information handling to a second display device coupled to a second information handling system. In response to the determining, the information from the input device is forwarded to the second information handling system.

### SUMMARY OF THE INVENTION

US2021055789A1, however, does not address the problem that different electronic apparatuses may be controlled via different input modalities. For example, one apparatus may be controlled by touch screen while another apparatus may be controlled by keyboard and mouse. The information forwarded by US2021055789A1 to the second information handling system, such as for example a key press, may not be interpretable if for example the information handling system expects an onscreen touch location.

It would be advantageous to address one or more of the above problems.

In a first aspect of the invention, a computer-implemented method is provided for providing input commands from an input device to an electronic apparatus. The computer-implemented method comprises:
- obtaining sensor data from a sensor, wherein the sensor data is indicative of a target of attention of a user in a workspace, wherein the workspace comprises at least two electronic apparatuses which each comprise or are connected to a respective input device for use in controlling the respective electronic apparatus;
- analysing the sensor data to identify an electronic apparatus in the workspace which is the target of attention of the user, thereby identifying a target electronic apparatus which comprises or is connected to a target input device;
- obtaining input commands from an input device operated by the user; and
- if the input device operated by the user is different from the target input device, using the input device operated by the user as a source input device for the target electronic apparatus by providing the input commands from the source input device to the target electronic apparatus, wherein providing the input commands to the target electronic apparatus comprises, if the target input device represents a different input modality than the source input device, converting the input commands to the different input modality.

In a further aspect of the invention, a system is provided for providing input commands from an input device to an electronic apparatus. The system comprises:
- a sensor interface for obtaining sensor data from a sensor, wherein the sensor data is indicative of a target of attention of a user in a workspace, wherein the workspace comprises at least two electronic apparatuses which each comprise or are connected to a respective input device for use in controlling the respective electronic apparatus;
- a processor subsystem configured to:
- analyse the sensor data to identify an electronic apparatus in the workspace which is the target of attention of the user, thereby identifying a target electronic apparatus which comprises or is connected to a target input device;
- obtain input commands from an input device operated by the user; and
- if the input device operated by the user is different from the target input device, using the input device operated by the user as a source input device for the target electronic apparatus by providing the input commands from the source input device to the target electronic apparatus;
wherein, if the target input device represents a different input modality than the source input device, the providing of the input commands to the target electronic apparatus comprises converting the input commands to the different input modality.

In a further aspect of the invention, a transitory or non-transitory computer-readable medium is provided comprising data representing a computer program, the computer program comprising instructions for causing a processor system to perform the computer-implemented method.

In accordance with the above measures, sensor data is obtained which is indicative of a target of attention of a user in a workspace. The sensor data may then be analysed to determine which electronic apparatus is likely to be the target of attention of the user. This electronic apparatus may here and elsewhere be referred to as the target electronic apparatus. It will be appreciated that a target electronic apparatus may be identified in various ways, as also elucidated elsewhere in this specification. For example, the user's target of attention may be determined based on gaze direction (e.g., eye gaze or head gaze), position and/or orientation of the user relative to the position and/or orientation of an electronic apparatus in the workspace. The analysis may be performed algorithmically, for example by a sensor data analysis algorithm. For example, a posture recognition algorithm may be applied to the sensor data to determine a posture of the user, with the user's posture being indicative of the target of attention.

In addition to identifying the target electronic apparatus, input commands may be obtained from an input device operated by the user. The input commands may represent input given by the user with the intention to operate the target electronic apparatus. To obtain the input commands, the input device operated by the user may be identified, e.g., amongst a plurality of input devices in the workspace. Such identification may likewise be performed based on the sensor data, e.g., by determining gaze direction, position and/or position of the user relative to the position and/or orientation of an input device in the workspace. After identifying the input device operated by the user, the input commands provided via this input device may be obtained in a manner as described in this specification, e.g., via the electronic apparatus to which the input device is connected or part of. Alternative, input devices in the workspace may, when used by the user, indiscriminately transmit their input commands to the system and method. As such, if input commands are received from an input device in the workspace, the user may be deemed to use this particular input device. In such embodiments, the receipt of input commands from an input device may implicitly identify the input device as being operated by the user, without a need for a separate additional identification step.

Having obtained the input commands and identified the target electronic apparatus, the input commands may be provided to the target electronic apparatus, for example via wireless or wired communication. This step may be performed selectively, that is, only if the input device operated by the user is different from the input device of the target electronic apparatus, or in other words, if the user is using an input device which is not directly connected to, or comprised in, the target electronic apparatus. In such cases, the input commands may need to be provided from the input device operated by the user, being a 'source' input device, to the target electronic apparatus in order for the target electronic apparatus to be able receive the input commands.

In accordance with the above measures, if the target input device represents a different input modality than the source input device, the input commands may be converted to the different input modality before providing the input commands to the target electronic apparatus. Here, the term 'input modality' may refer to the type of input given via an input device, and may for example distinguish between touch, voice, gaze, typing, operating a mouse or joystick, etc. It will be appreciated that the type of input is typically characterized by the type of input device, e.g., a touch screen, microphone, eye-tracker, keyboard, mouse, or joystick. The conversion may thus comprise converting between, for example, input modalities by which a position of a pointer is controlled (e.g., a mouse or a joystick or a gaze tracker) and input modalities which are not meant to control a pointer but rather allow direct selection or manipulation of onscreen objects (e.g., a touch screen, a set of physical buttons or a keyboard).

By way of the conversion, the system and method may allow the source input device to emulate the target input device, despite both input devices representing different input modalities. For example, if the target electronic apparatus is normally controlled by touch screen, and the source input device is an eye tracker, the tracking of the eye may yield a coordinate which may be converted into a touch screen press to emulate the user pressing the touch screen. Similarly, such conversion may also comprise converting between similar input modalities, e.g., by converting input commands obtained by joystick to input commands of a mouse, thereby allowing the joystick to emulate the mouse, or from one type of mouse to another type of mouse.

The above measures may have the advantage that a user who wishes to switch between electronic apparatuses may use other input devices within the workspace to operate the electronic apparatus besides the input device which is connected to, or comprised in, the target electronic apparatus. Here and elsewhere, the input device used by the user may be referred to as source input device while the input device of the target electronic apparatus may be referred to as target input device. This may be convenient for the user, as s/he may for example use any of the input devices in the workspace as source input device. For example, the user may make use of an input device which is already within reach and/or already in use to operate another electronic apparatus, or an input device which is a personal input device of the user, e.g., a mobile phone. Advantageously, there may be less need for the user to switch between input devices, which otherwise may be cumbersome and time consuming. At the same time, it is not needed for the user to use the same type of input device as the target input device. Rather, a different type of input device, or in general, a different type of input modality may be used. This way, more of the available input devices within a workspace may be used to operate the target electronic apparatus. Moreover, input modalities may be used which may in some cases be better suited for providing the input commands. For example, while the target electronic apparatus may only offer touch screen input, an eye tracker may be used as input device, allowing the user to operate the target electronic apparatus hands-free, which may be advantageous, for example in a medical context where it may allow a clinician to keep their hands free to care for a patient.

Optionally, the sensor is an image sensor for obtaining image data of the workspace, and wherein analysing the sensor data comprises analysing the image data to detect a gaze direction of the user and to identify the target electronic apparatus based on the gaze direction of the user. The gaze direction of a user may be indicative of the user's target of attention and may be detected reliably and unobtrusively using a camera with an image sensor and a gaze detection algorithm. For example, a camera may be arranged in the user's workspace, which workspace may for example be a room or any other indoor space or an outdoor space. The camera may capture the face and eyes of the user, allowing the gaze direction to be determined. The gaze direction may be indicative of which electronic apparatus is the target of attention of the user, as the user is likely to gaze at the electronic apparatus which is the user's target of attention. In another example, the image sensor may be integrated into a wearable device which may be worn by the user, for example into a pair of smart glasses with built-in eye tracking.

Optionally, converting the input commands comprises:
- accessing mapping data which maps one more source input commands of a source input modality to one or more target input commands of a target input modality; and
- using the mapping data to convert the input commands from the source input device to input commands for the target electronic apparatus.

The conversion from source input commands, referring to input commands of the input modality represented by the source input device, and target input commands, referring to input commands of the input modality represented by the target input device, may be defined by mapping data, which mapping data may then be used to carry out the conversion. For example, the mapping data may comprise a set of rules to map source input commands to target input commands. Another example is that the mapping data may comprise or define a machine learned (also known as 'trained') model which is trained to map source input commands to target input commands.

Optionally, if the mapping data does not provide a mapping for an input command from the source input device, or if there is ambiguity in matching the input command to a mapping, the system and method prompt the user for feedback to assist in the conversion of the input commands. Such mapping data may for example be obtained from a central database, e.g., an online database which stores such mapping data. In some examples, the system and method may request the user to select the mapping data from the central database, and/or to confirm a selection by the system.

Optionally, the processor subsystem and method are arranged for updating the mapping data based on the feedback of the user.

Optionally, the target electronic apparatus is operable by a user interface comprising one or more selectable user interface elements, and wherein converting the input commands comprises mapping one or more input commands of the source input device to one or more input commands causing a selection of one of the selectable user interface elements.

Optionally, the processor subsystem and method are arranged for identifying the one or more selectable user interface elements of the user interface, for example by analysing image data showing the user interface. The user interface elements may thus be identified using a camera or the like. This may enable the input commands to be converted to be able to select on-screen user interface element.

Optionally, the source input device and the target input device are different input devices selected from a group comprising:
- a touch screen for providing input commands via touch;
- a keyboard for providing input commands via key presses;
- a mouse for providing input commands via movement and/or mouse button presses;
- a physical button for providing input commands by pressing the physical button;
- a physical slider for providing input commands by sliding the physical slider;
- a microphone for providing input commands via speech; and
- a camera for providing input commands via gestures and/or gaze direction.

Optionally, the processor subsystem and method are arranged for obtaining the input commands from the source input device via an electronic apparatus to which the source input device is connected or which comprises the source input device, for example via a software component running on the electronic apparatus.

Optionally, the processor subsystem and method are arranged for determining whether the user is authenticated to use the target electronic apparatus and providing the input commands to the target electronic apparatus only if the user is determined to be authenticated to use the target electronic apparatus

Optionally, the system further comprises the sensor.

Optionally, the system is implemented as subsystem of one of the at least two electronic apparatuses or as a distributed subsystem which is distributed over the at least two electronic apparatuses.

It will be appreciated by those skilled in the art that two or more of the embodiments, implementations, and/or optional aspects of the invention may be combined in any way deemed useful.

Modifications and variations of any system, any computer-implemented method and/or any computer program product, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a workspace comprising a computer and a tablet device, wherein the computer is connected to a keyboard and mouse and the tablet device comprises a touch screen, wherein the computer is configured to detect that the user's attention is targeted to the tablet device, to convert the mouse commands to touch screen commands and to relay the converted commands to the tablet device;
Fig. 2 shows a system for providing input commands from an input device to an electronic apparatus, wherein the system is configured to detect a gaze direction of a user on the basis of image data captured by a camera in a workspace to identify a target electronic apparatus to which input commands from the input device should be provided;
Fig. 3 shows a computer-implemented method for providing input commands from an input device to an electronic apparatus; and
Fig. 4 shows a non-transitory computer-readable medium comprising data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 10: pointer click
- 12: touch press

- 20: user
- 22: gaze direction
- 30: workspace

- 40: camera
- 60: display
- 62: display data
- 80: keyboard and mouse
- 82: keyboard and mouse data
- 90: touch screen

- 100: system, such as a computer, for converting input commands
- 120: camera interface
- 140: processor subsystem
- 142-146: data communication
- 160: memory
- 180: user interface subsystem
- 182: display output interface
- 184: user input interface

- 200: tablet device

- 300: method for converting input commands
- 310: obtaining sensor data indicative of target of attention
- 320: analysing sensor data to identify target electronic apparatus
- 330: obtaining input commands from input device
- 340: providing input commands to target electronic apparatus
- 350: converting input commands to target modality

- 400: non-transitory computer-readable medium
- 410: data representing computer program

### DETAILED DESCRIPTION OF THE EMBODIMENTS

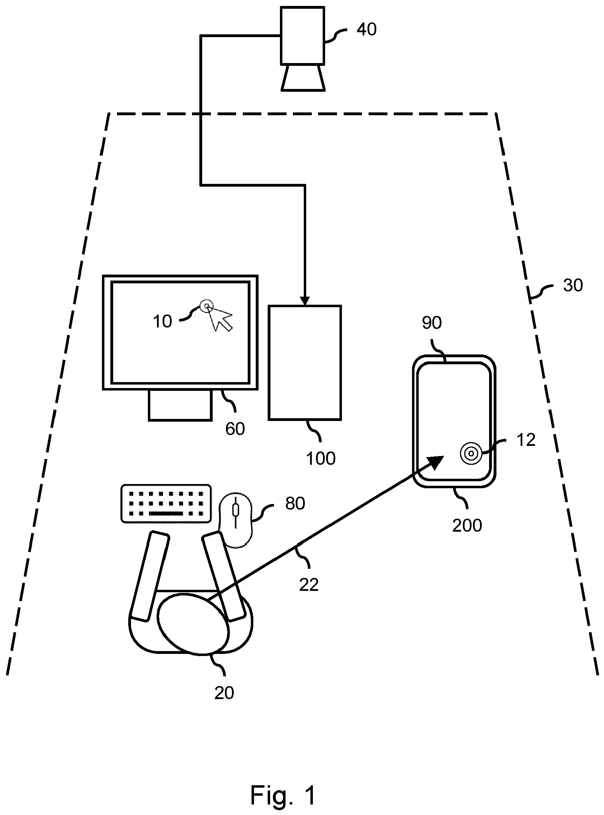

**Fig. 1** shows a workspace 30, being for example a room or any other indoor space or an outdoor space, which by way of example is shown to comprise two electronic apparatuses, namely a computer 100 and a tablet device 200. The computer 100 is shown to be connected to an external display 60 and to comprise a keyboard and mouse 80 as input devices, while the tablet device 200 comprises a touch screen 90. At a given moment in time, a user 20 may make use of the keyboard and mouse 80 to operate the computer 100. For example, the user 20 may enter text, move a pointer onscreen, etc.

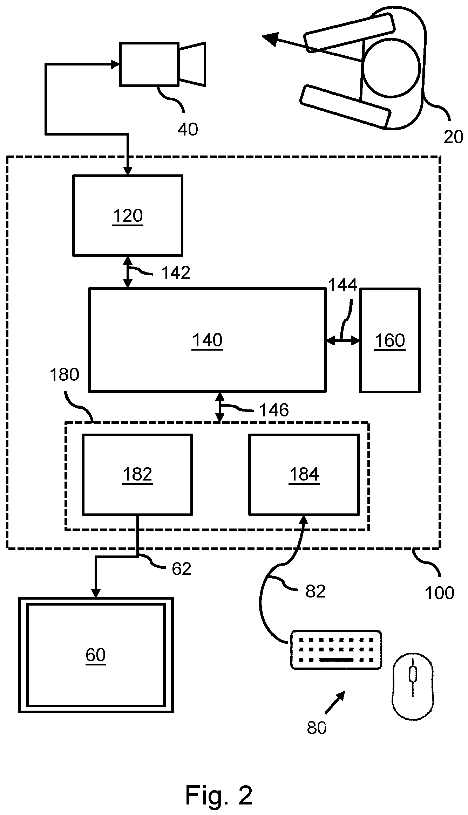

In the example of Fig. 1, the computer 100 may be used by the user 20 for a particular purpose, e.g., for radiology reporting in a medical context, but may additionally be configured to function as a system which relays input commands from a source input device to a target electronic apparatus, which system is also described in general with reference to Fig. 2 and following. Accordingly, the computer 100 may configured to determine a target of attention of the user 20. For that purpose, the computer 100 may obtain image data of the user 20 from a camera 40, which image data may show the head and face of the user. The computer 100 may further execute software which may analyse the image data to determine a gaze direction of the user 20. This way, the computer 100 may determine that at a given moment the user's attention is targeted at the tablet device 200 rather than at the computer 100. This change in attention may be evident from the gaze of the user 20 being directed towards the tablet device 200, as illustrated by the arrow 22 in Fig. 1. Having identified that the tablet device 200 is the user's target of attention, the computer 100 may provide input commands which are provided via the keyboard or mouse 80 to the tablet device 200 to enable the user to operate the tablet device 200 using the keyboard or mouse 80 instead of, or in addition to, using the touch screen 90. However, as the keyboard and mouse 80 represent a different input modality than the touch screen 90, e.g., involving key presses and relative movements instead of onscreen presses, the computer 100 may convert the input commands obtained from the keyboard and mouse 80 into input commands which could have been given via the touch screen 90. The converted input commands may then be transmitted by the computer 100 to the tablet device 200, for example via a wireless or wired connection, where they may be used as input commands and processed in a same or similar manner as if the input commands had been given via the touch screen 90. In a specific example, a pointer click 10 may be converted into a touch screen press 12.

In the example of Fig. 1, the functionality of providing and converting the input commands is implemented by the computer 100 to which the source input device 80 is connected. It will be appreciated, however, that this functionality may also be implemented by a separate system. Such a separate system may provide input commands from a source input device operated by a user to a target electronic apparatus which is the target of attention of the user. For that purpose, the system may be in data communication with at least the source input device and the target electronic apparatus. Such data communication may take various forms, including wireless data communication (e.g., Wi-Fi, Bluetooth, Zigbee, etc.) and wired data communication (e.g., Ethernet). In some embodiments, the system may be in direct data communication with the source input device, while in other embodiments, the system may be in data communication with the source input device via the electronic apparatus to which the input device is connected or comprised in. The latter electronic apparatus may elsewhere also be referred to as 'source electronic apparatus' to distinguish from the target electronic apparatus. In such embodiments, the source electronic apparatus may be configured to relay or forward the input commands to the system. For that purpose, a software component may be installed on the source electronic apparatus, for example in form of a driver or agent or an application. Such a software component may for example capture input commands from an input device(s) connected to the respective electronic apparatus and may transmit the input commands to the system. On the target electronic apparatus, also a software component may be installed to receive the converted input commands sent by the system and to cause the target electronic apparatus to act upon the input commands as if they were received from a locally connected input device. The software components installed on the source electronic apparatus and the target electronic apparatus may be the same, e.g., to allow the roles of source and target to be exchanged. Of course, the software components may also be implemented as different components.

A specific example of the conversion may be the following. Once a connection has been setup between the input device and the target electronic apparatus, the system may map input commands, including those which may be specific to the source input device and/or the source electronic apparatus (such as keyboard shortcuts), to the target electronic apparatus. More specifically, for any input commands, the system may determine if a comparable input command is available on the target electronic apparatus, and if so, convert the input command accordingly. For example, the keyboard shortcut ALT-F4, which may be provided via a keyboard connected to a source electronic apparatus, may be converted to an input command by which the 'X' symbol of a graphical window shown on a touch screen is pressed (which 'X' symbol would otherwise have to be pressed by touch).

In general, the converting of input commands may comprise accessing mapping data which maps one more source input commands of a source input modality to one or more target input commands of a target input modality and using the mapping data to convert the input commands from the source input device to input commands for the target electronic apparatus. The mapping data may for example comprise a set of rules to map source input commands to target input commands. Such rules may translate an input command of the source input modality to an input command of the target input modality. The set of rules may for example be implemented by a rules engine or a look-up table (LUT). Additionally, or alternatively, the mapping data may comprise a machine learned model which may be trained to map source input commands to target input commands. In some embodiments, if the mapping data does not provide a mapping for an input command from the source input device, or if there is ambiguity in matching the input command to a mapping, the user may be prompted for feedback to assist in the conversion of the input commands. For example, the user may be requested to specify the corresponding target input command or select from alternative target input commands if there is no corresponding target input command. In some embodiments, the mapping data may be updated based on the feedback of the user, for example to alter the mapping or to add entries to the mapping.

In general, the target electronic apparatus may be operable by a user interface comprising one or more selectable user interface elements. For example, the user interface may be a graphical user interface which comprises selectable user interface elements such as checkboxes, buttons, toggles, hyperlinks, sliders, etc. When converting the input commands, one or more input commands of the source input device may be mapped to one or more input commands to cause a selection of one of the selectable user interface elements. For example, a keyboard press on an arrow key may cause a slider to be slid in the corresponding direction. The user interface elements which may be selectable may be identified by the system. For example, data may be available to the system which is indicative of which user interface elements are selectable. In a specific example, the data may be image data showing the user interface, and the system may identify the selectable user interface elements by analysing the image data, for example using optical character recognition (OCR) to detect text labels of selectable user interface elements, or by using image analysis to interpret icons representing selectable user interface elements. Such analysis may not only determine which user interface elements are selectable but also what type of input command is represented by the selection of the user interface element. For example, a button in a graphical user interface which is labelled 'Up' or shows an arrow pointing upward may be detected to correspond to the up-arrow key of a keyboard.

In general, the source input device and the target input device may be different input devices selected from a group comprising: a touch screen for providing input commands via touch, a keyboard for providing input commands via key presses, a mouse for providing input commands via movement and/or mouse button presses, a physical button for providing input commands by pressing the physical button, a physical slider for providing input commands by sliding the physical slider, a microphone for providing input commands via speech, and a camera for providing input commands via gestures and/or gaze direction.

A specific example may be the following: if the system detects that there is an active input event (e.g., a keyboard button press), the event may be relayed to the electronic apparatus the user was actively gazing at. This can be done by, e.g., establishing an active Bluetooth connection between the input device and the target electronic apparatus. For example, the user may be behind their desk typing on a laptop. A message may arrive on a smartphone which is situated on the same desk. The user may look at the reply text field on the phone and start typing on the keyboard of the laptop. The keystrokes from the laptop may then be relayed to the text field on the phone. When gazing away, back at the laptop screen, the keystrokes may be again be relayed to an application running on the laptop.

In general, the sending of input commands from a source input device to a target electronic apparatus may be considered a 'switching' to the target electronic apparatus, in that the input commands may have previously been sent to a source electronic apparatus. In some embodiments, the system may implement measures to avoid inadvertently switching to another electronic apparatus. For example, the user may briefly gaze at another electronic apparatus but may not desire to use this electronic apparatus. To avoid switching in such situations, the system may for example allow a user to lock an input device to a particular electronic apparatus, and/or require a user to confirm switching to another electronic apparatus (e.g., by requiring the user to agree to or confirm such switching). In some embodiments, the system may provide feedback to the user that the input device is switched to another apparatus, e.g., by providing visual feedback (e.g., border of the screen flashes) or auditive feedback, etc. In some embodiments, the system may provide such feedback to the user if the input device will be switched to another apparatus. This may allow a user to still cancel the switching to the other apparatus.

In general, the target of attention of the user may be determined in various ways. For example, one or more exterior cues of the user may be analysed, e.g., from camera images, to determine which apparatus is at the centre of attention of the user. Such exterior cues may include, but not be limited to, one or more of the group of: gaze direction (e.g., eye gaze or head gaze), position of the user, orientation of the user and posture of the user. Such exterior cues may be interpreted from or in relation to the user's body but also from or in relation to specific body parts, e.g., the head, arm, and/or hand. In a specific example, the user may point to the target apparatus, which may be identified in camera images. In some embodiments, the user may also verbally or electronically indicate the target apparatus, e.g., by mentioning the target apparatus by voice, which may be determined using a microphone as sensor and speech recognition as analysis technique.

It will be appreciated that the above-mentioned techniques for determining the target electronic apparatus may also be used to determine which input device is used by the user. For example, the body skeleton of the user may be detected in camera images. From the detected body skeleton, it may be determined that the user is interacting with a particular input device, for example based on the position and/or orientation of the body, or by the body skeleton showing certain input actions in relation to a particular input device (e.g., a user's hand may hold a joystick, or hoover over a keyboard or touch screen, etc.).

In general, the electronic apparatuses described in this specification may include general purpose apparatuses such as laptops, desktops, workstations, servers, mobile phones, tablet devices, etc., and specific purpose apparatuses such as for example medical apparatuses, e.g., patient monitors, imaging apparatuses, instruments, etc. In general, the electronic apparatuses may be computing devices, with this term referring to an electronic device for processing information and for performing calculations. Application examples include the following: in an interventional care unit (ICU) in a hospital or other health care institution, the system may be used to enable a user to quickly acknowledge an alarm on a patient monitor by using the touchscreen of a smart watch. The system may also be used to enable a user to add a note to a report displayed on a computer, with the user using the microphone of a phone to provide speech-to-text input to the computer.

In general, the system may determine whether the user is authenticated to use the target electronic apparatus and providing the input commands to the target electronic apparatus only if the user is determined to be authenticated to use the target electronic apparatus. This way, if the user for example gazes at a smartphone that he/she is not authenticated to use, the system may omit the smartphone as a target apparatus. Such authentication may be determined in a manner which is known per se, e.g., using an authentication database which lists individual users and which identifies for which electronic apparatuses a user is authenticated (or not authenticated). To determine an identify of the user, any known technique may be used, including but not limited to face detection. Additionally, or alternatively to checking if the user is authenticated to use the target electronic apparatus, the system may determine if the source input device is authenticated and allowed to be used by the target electronic apparatus. For example, an input device may initially be untrusted and may require a certificate to be used with the target electronic apparatus, or the user may have to explicitly approve the use of the input device.

**Fig. 2** shows a system 100 for providing input commands from an input device to an electronic apparatus. The system 100 may in some embodiments correspond to the computer 100 of Fig. 1, while in others, the system 100 may not be embodied by a computer but rather by another electronic apparatus. The system 100 may be configured to identify an electronic apparatus in the workspace of the user 20 which is the target of attention of the user 20, in a manner as described elsewhere in this specification. In the example of Fig. 2, the system 100 may identify the target electronic apparatus using a camera 40 and a camera interface 120 via which the image data acquired by the camera 40 may be accessed. The system 100 is further shown to comprise a processor subsystem 140 configured to internally communicate with the camera interface 120 via data communication 142, with a memory 160 via data communication 144 and with a user interface subsystem 180 via data communication 146. The memory 160 may for example be a volatile memory in which a computer program may be loaded which may cause the processor subsystem 140 to carry out functions which are described in this specification, such as analysing the sensor data to identify the target electronic apparatus, providing input commands from a source input device to the target electronic apparatus, with the latter further comprising converting the input commands to the different input modality of the target electronic apparatus.

In some embodiments, the system 100 may comprise a user interface subsystem 180, which user interface subsystem may be configured to, during operation of the system 100, enable a user to interact with the system 100, for example using a graphical user interface. For that and other purposes, the user interface subsystem 180 is shown to comprise a user input interface 184 configured to receive user input data 82 from one or more user input devices 80 operable by the user. The user input devices 80 may take various forms, including but not limited to a keyboard, mouse, touch screen, microphone, etc. Fig. 2 shows the user input devices to be a keyboard and mouse 80. In general, the user input interface 184 may be of a type which corresponds to the type of user input device(s) 80, i.e., it may be a thereto corresponding type of user device interface. The user interface subsystem 180 is further shown to comprise a display output interface 182 configured to provide display data 62 to a display 60 to visualize output of the system 100. In the example of Fig. 2, the display is an external display 60. Alternatively, the display may be an internal display of the system 100. It is noted that in embodiments in which the system 100 is the source electronic apparatus, one or more of the user input devices 80 may represent the source input device, while in embodiments in which the system 100 is the target electronic apparatus, one or more of the user input devices 80 may represent the target input device. It is noted that in other embodiments, the user input devices 80 may be primarily to operate the system 100 and not to operate other electronic apparatuses.

Although not shown explicitly in Fig. 2, the system 100 may further comprise one or more communications interfaces for establishing data communication with the target electronic apparatus and with the source input device, or with a source electronic apparatus to which the source input device is connected. The one or more communications may include one or more wireless communication interfaces (e.g., Wi-Fi, Bluetooth, Zigbee, etc.) and/or one or more wired communication interfaces (e.g., Ethernet, optical, etc).

In general, the system 100 may be embodied as, or in, a single device or apparatus. The device or apparatus may be a general-purpose device or apparatus, such as a laptop or desktop computer, but may also be a dedicated device or apparatus configured to perform the functions described in this specification. The device or apparatus may comprise one or more microprocessors which may represent the processor subsystem, and which may execute appropriate software. The software may have been downloaded and/or stored in a corresponding memory, e.g., a volatile memory such as RAM or a nonvolatile memory such as Flash. Alternatively, the functional units of the system, e.g., the input interface, the user interface subsystem, and the processor subsystem, may be implemented in the device or apparatus in the form of programmable logic, e.g., as a Field-Programmable Gate Array (FPGA). In general, each functional unit of the system 100 may be implemented in the form of a circuit. It is noted that the system 100 may also be implemented in a distributed manner, e.g., involving different devices or apparatuses. For example, the distribution may be in accordance with a client-server model, e.g., using a server and workstation. For example, the user input interface and the display output interface may be part of the workstation, while the processor subsystem may be a subsystem of the server. It is noted that various other distributions are equally conceivable. For example, the system may be a subsystem of the source electronic apparatus or the target electronic apparatus or may be distributed over two or more of the electronic apparatuses in the workspace.

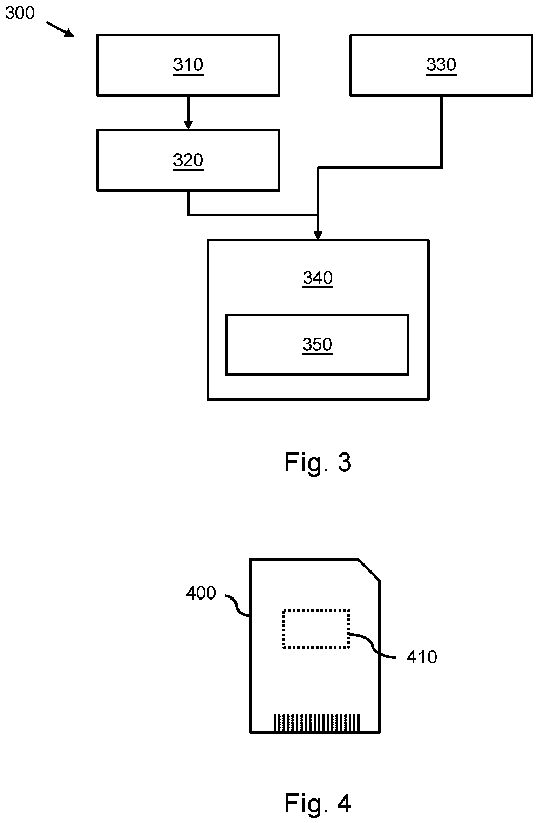

**Fig. 3** shows a computer-implemented method 300 for providing input commands from an input device to an electronic apparatus. The method comprises, in a step titled "OBTAINING SENSOR DATA INDICATIVE OF TARGET OF ATTENTION", obtaining 310 sensor data as described elsewhere in this specification, and in a step titled "ANALYSING SENSOR DATA TO IDENTIFY TARGET ELECTRONIC APPARATUS", analysing 320 the sensor data to identify an electronic apparatus in the workspace which is the target of attention of the user, thereby identifying a target electronic apparatus which comprises or is connected to a target input device. The method 300 further comprises, in a step titled "OBTAINING INPUT COMMANDS FROM INPUT DEVICE", obtaining 330 input commands from an input device operated by the user, and in a step titled "PROVIDING INPUT COMMANDS TO TARGET ELECTRONIC APPARATUS", if the input device operated by the user is different from the target input device, using the input device operated by the user as a source input device for the target electronic apparatus by providing 340 the input commands from the source input device to the target electronic apparatus. The step of providing 340 the input commands further comprises, in a step titled "CONVERTING INPUT COMMANDS TO TARGET MODALITY", if the target input device represents a different input modality than the source input device, converting 350 the input commands to the different input modality. It will be appreciated that the steps of method 300 of Fig. 3 and any other method described in this specification may be performed in any suitable order, subject to, where applicable, a particular order being necessitated, e.g., by input/output relations.

It will be appreciated that any method described in this specification may be implemented on a computer as a computer implemented method, as dedicated hardware, or as a combination of both. As also illustrated in **Fig. 4****,** instructions for a computer, e.g., in the form of executable code, may be stored on a computer readable medium 400, e.g., in the form of a series 410 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 4 shows a memory device 400 in form of a flash memory card.

In accordance with an abstract of the present specification, a system and method are provided for providing input commands from an input device to an electronic apparatus. For that purpose, sensor data is obtained from a sensor, the sensor data may be analysed to identify an electronic apparatus in a workspace which is the target of attention of a user, input commands may be obtained from an input device operated by the user, and if the input device operated by the user is different from the target input device, the input device operated by the user may be used as a source input device for the target electronic apparatus by the input commands from the source input device being provided to the target electronic apparatus. The latter comprises, if the target input device represents a different input modality than the source input device, converting the input commands to the different input modality. This way, the source input device may be used to emulate the target input device, despite both input devices representing different input modalities. This way, more of the available input devices near the user may be used to operate the target electronic apparatus, reducing the need to switch input devices.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (300) for providing input commands from an input device to an electronic apparatus, the method comprising:
- obtaining (310) sensor data from a sensor (40), wherein the sensor data is indicative of a target of attention of a user (20) in a workspace (30), wherein the workspace comprises at least two electronic apparatuses (100, 200) which each comprise or are connected to a respective input device (80, 90) for use in controlling the respective electronic apparatus;
- analysing (320) the sensor data to identify an electronic apparatus in the workspace which is the target of attention of the user, thereby identifying a target electronic apparatus (200) which comprises or is connected to a target input device;
- obtaining (330) input commands from an input device (80) operated by the user; and
- if the input device operated by the user is different from the target input device (90), using the input device operated by the user as a source input device for the target electronic apparatus by providing (340) the input commands from the source input device to the target electronic apparatus, wherein providing the input commands to the target electronic apparatus comprises, if the target input device represents a different input modality than the source input device, converting (350) the input commands to the different input modality.

2. The computer-implemented method (300) according to claim 1, wherein the sensor is an image sensor (40) for obtaining image data of the workspace (30), and wherein analysing the sensor data comprises analysing the image data to detect a gaze direction (22) of the user and to identify the target electronic apparatus based on the gaze direction of the user.

3. The computer-implemented method (300) according to claim 1 or 2, wherein converting the input commands comprises:
- accessing mapping data which maps one more source input commands of a source input modality to one or more target input commands of a target input modality; and
- using the mapping data to convert the input commands from the source input device to input commands for the target electronic apparatus.

4. The computer-implemented method (300) according to claim 3, further comprising, if the mapping data does not provide a mapping for an input command from the source input device, or if there is ambiguity in matching the input command to a mapping, prompting the user for feedback to assist in the conversion of the input commands.

5. The computer-implemented method (300) according to claim 4, further comprising updating the mapping data based on the feedback of the user.

6. The computer-implemented method (300) according to any one of claims 3 to 5, wherein the mapping data comprises at least one of:
- a set of rules to map source input commands to target input commands; and
- a machine learned model which is trained to map source input commands to target input commands.

7. The computer-implemented method (300) according to any one of claims 1 to 6, wherein the target electronic apparatus (200) is operable by a user interface comprising one or more selectable user interface elements, and wherein converting the input commands comprises mapping one or more input commands of the source input device to one or more input commands causing a selection of one of the selectable user interface elements.

8. The computer-implemented method (300) according to claim 7, further comprising identifying the one or more selectable user interface elements of the user interface, for example by analysing image data showing the user interface.

9. The computer-implemented method (300) according to any one of claims 1 to 8, wherein the source input device (80) and the target input device (90) are different input devices selected from a group comprising:
- a touch screen for providing input commands via touch;
- a keyboard for providing input commands via key presses;
- a mouse for providing input commands via movement and/or mouse button presses;
- a physical button for providing input commands by pressing the physical button;
- a physical slider for providing input commands by sliding the physical slider;
- a microphone for providing input commands via speech; and
- a camera for providing input commands via gestures and/or gaze direction.

10. The computer-implemented method (300) according to any one of claims 1 to 9, further comprising obtaining the input commands from the source input device (80) via an electronic apparatus (100) to which the source input device is connected or which comprises the source input device, for example via a software component running on the electronic apparatus.

11. The computer-implemented method (300) according to any one of claims 1 to 10, further comprising determining whether the user is authenticated to use the target electronic apparatus (200) and providing the input commands to the target electronic apparatus only if the user is determined to be authenticated to use the target electronic apparatus.

12. A transitory or non-transitory computer-readable medium (400) comprising data (410) representing a computer program, the computer program comprising instructions for causing a processor system to perform the method according to any one of claims 1 to 11.

13. A system (100) for providing input commands from an input device to an electronic apparatus, the system comprising:
- a sensor interface (120) for obtaining sensor data from a sensor (40), wherein the sensor data is indicative of a target of attention of a user (20) in a workspace (30), wherein the workspace comprises at least two electronic apparatuses (100, 200) which each comprise or are connected to a respective input device (80, 90) for use in controlling the respective electronic apparatus;
- a processor subsystem (140) configured to:
- analyse the sensor data to identify an electronic apparatus in the workspace which is the target of attention of the user, thereby identifying a target electronic apparatus (200) which comprises or is connected to a target input device (90);
- obtain input commands from an input device operated by the user; and
- if the input device operated by the user is different from the target input device (90), using the input device operated by the user as a source input device for the target electronic apparatus by providing the input commands from the source input device to the target electronic apparatus;
wherein, if the target input device represents a different input modality than the source input device, the providing of the input commands to the target electronic apparatus comprises converting the input commands to the different input modality.

14. The system (100) according to claim 13, further comprising the sensor (40).

15. The system (100) according to claim 13 or 14, wherein the system is implemented as subsystem of one of the at least two electronic apparatuses or as a distributed subsystem which is distributed over the at least two electronic apparatuses.
